(19) Europäisches Patentamt / European Patent Office / Office européen des brevets

(11) **EP 4 589 419 A1**

(12) **EUROPEAN PATENT APPLICATION**

(43) Date of publication:
**23.07.2025** Bulletin 2025/30

(21) Application number: **24152499.0**

(22) Date of filing: **17.01.2024**

(51) International Patent Classification (IPC):
**G06F 8/10** (2018.01)    **G06F 8/65** (2018.01)
**G06F 11/00** (2006.01)    **G06N 5/02** (2023.01)
**G06Q 50/18** (2012.01)

(52) Cooperative Patent Classification (CPC):
**G06F 8/10; G06F 8/65; G06F 11/004; G06N 5/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **IDNI AG**
**9495 Triesen (LI)**

(72) Inventor: **ASOR, Ohad**
**9495 Triesen (LI)**

(74) Representative: **Keltie LLP**
**No. 1 London Bridge**
**London SE1 9BA (GB)**

(54) **VALIDATION OF COMPUTER SOFTWARE UPDATES**

(57) The invention relates to validating software updates. An update for a software system is received, both being expressed in an extended formal language. Sentences in a base formal language, up to logical equivalence, form elements in a Boolean Algebra (BA), that has elements 0, 1 denoting falsity and truth. The extended language includes the first-order theory of BAs interpreted in the BA arising from the base language, extended to include constant symbols each corresponding to a respective logical equivalence class of sentences in the base language. The extended and base languages are elementarily equivalent. The update corresponds to an update sentence u in the extended formal language. For a condition element c specifying a condition to validate the update, the invention includes computing a truth value for $uc' = 0$. If $uc' = 0$ is false, the update is rejected. If $uc' = 0$ is true, the update is installed.

Software System 100 at a
Computing Device 200

402 — Receive a candidate software update. Both the software system and the candidate software update are expressed in an extended formal language that is an extension of one or more base formal languages. Sentences in each base formal language, up to logical equivalence, form elements in a Boolean Algebra, which has a falsity element 0 denoting falsity and and has a truth element 1 denoting truth. The extended formal language includes the first-order theory of Boolean Algebras interpreted in the Boolean Algebra arising from each base formal language, extended to include a plurality of constant symbols, each corresponding to a respective logical equivalence class of sentences in each base formal language. The extended formal language and each base formal language, regarded as Boolean Algebras under logical equivalence, are elementarily equivalent under a signature of Boolean Algebra. The candidate software update corresponds to an update sentence u in the extended formal language.

404 — For a condition element c, in the extended formal language, specifying a condition to validate the candidate software update, computing a truth value for $uc' = 0$ in the extended formal language, wherein $uc'$ is the logical conjunction of u with the logical negation of c.

406 — When $uc' = 0$ is false, reject the candidate software update.

408 — When $uc' = 0$ is true, accept the candidate software update, and instal the candidate software update on the computing device.

Figure 4

**Description**

TECHNICAL FIELD

The present invention relates to validation of computer software updates and, in particular, to automatically determining whether to install a software update based on whether the software update satisfies one or more conditions.

BACKGROUND

Designing formal or logical languages with the ability to refer to the truth of their own sentences has been historically problematic in the field of logic. Generally speaking, it is not possible to include statements about truth in a formal language - and about statements in the same language - while keeping the language consistent. This is because the inclusion of such truth reference allows languages to express paradoxes. Perhaps the most widely known result of this nature is Tarski's so-called Undefinability of Truth theorem (Tarski's undefinability theorem - Wikipedia).

This inability to refer to truth in the same formal language is a practical limitation in computing. In particular, one formal language cannot refer to whether another statement in that language is true, or whether one sentence entails the other, as well as similar logical questions that come down to speaking about truth. Known approaches for addressing this issue include so-called paraconsistent and many-valued logics; however, all of the known approaches are of the nature of allowing the languages to contain paradoxes. In this way, the languages are rendered to be so-called nonclassical logics. In those languages, it is therefore no longer the case that every precise statement is either true or false (in a given model if such a setting even has a model theory) in the classical sense.

In computing, the above issue is problematic for performing automatic updates to a computer software system installed on a computing device, and more generally, for the case where a system implemented in a certain language is able to deal with sentences in the same language (where performing a software update is one example of such a situation). In one example, an auto-update feature may download a software update, check that the software update satisfies one or more conditions, and then install the software update only if the one or more conditions are satisfied. As checking the condition is of the form of a logical implication (i.e. 'does the update entail that certain conditions are met?'), then there is currently no formal language that can support implementation of such an auto-update feature while expressing the current software and the software update in the same formal language, as such a language would include a contradiction. Also from a computational implementation point of view, having two languages is unhelpful: either the update-condition itself cannot be updated, or one would need unboundedly many different languages, one per update, entailing even more difficulties.

Also in computing, the above-outlined issue relating to paradoxes in formal languages is relevant to the computational implementation of knowledge representation and reasoning systems (KRRs) or, simply, knowledge systems. KRR is a sub-field of artificial intelligence that focuses on how to represent and manipulate knowledge in a way that allows computers to reason, infer, and make decisions based on that knowledge. KRR has applications in various domains, including expert systems, decision support systems, robotics, semantic web, and more. Common formalisms and languages used in KRR include first-order logic, description logics, semantic networks, and rule-based systems. Once knowledge is represented, KRR systems use various inference mechanisms to derive new information or conclusions from the existing knowledge. These mechanisms include deductive reasoning (using logical rules), inductive reasoning (generalising from specific examples) and probabilistic reasoning (considering uncertainty and probabilities). Inference engines are the software components responsible for implementing in software these inference mechanisms taking as input the formal knowledge representations, namely, sentences in some formal or logical language(s). In particular, it is desired for these inference engines to be able to determine whether a statement that can be expressed in any given knowledge representation language, is a contradictory statement. Many logical reasoning tasks may be reduced to contradiction detection. For example, to determine whether sentence X entails sentence Y, it is asked whether the sentence "X and not Y" is contradictory. In a case where Y contains free variables, finding all assignments that make the above entailment true amounts to query answering. The abovementioned KRR languages deal with objects and relations between objects. It is of practical necessity to also deal with objects being sentences in the language itself. For example, in "X said Y", Y is also a sentence. However, no known KRR language (or logic in general) can consistently handle statements in its own language, combining them with other sentences, and referring to whether they contain a contradiction, or entail each other, and so on for other logical questions.

It is against this background to which the present invention is set.

SUMMARY OF INVENTION

In an aspect of the present invention there is provided a computer-implemented method of validating software updates. The method is performed by a software system or software platform implemented or installed on a computing device having one or more processors and a memory device storing instructions thereon that, when executed by the one or more processors, cause the one or more processors to perform the method described herein.

The method, performed by the software system, comprises receiving a candidate software update for the software system. Both the software system and the candidate software update are expressed in an extended formal language that is an extension of one or more base formal languages. Sentences in each base formal language, up to logical equivalence, form elements in a Boolean Algebra, that has a falsity element 0 denoting falsity and that has a truth element 1 denoting truth. The extended formal language includes the many-sorted first-order theory of Boolean Algebras interpreted in the Boolean Algebra arising from each base formal language, extended to include a plurality of constant symbols each corresponding to a respective logical equivalence class of sentences in each base formal language. The extended formal language and each base formal language, regarded as Boolean Algebras under logical equivalence, are elementarily equivalent under a signature of Boolean Algebra. The candidate software update corresponds to an update sentence u in the extended formal language.

For a condition element c, in the extended formal language, specifying a condition to validate the candidate software update, the method, performed by the software system, comprises computing a truth value for $uc' = 0$ in the extended formal language. Here, $uc'$ is the logical conjunction of u with the logical negation of c. The condition may be regarded as being implied from the software system as a whole. In particular, the condition element c may be recited explicitly in the extended formal language, or it may be implied from the extended formal language describing the software system. The condition may be any suitable condition, e.g. if the new code in the candidate software update implies that private data is sent over a (public) network then the update should be rejected. However, note that the specific content/requirements of the condition is not of relevance to the inventive concept disclosed herein.

In accordance with a determination that $uc' = 0$ is false, the method comprises rejecting the candidate software update. In accordance with a determination that $uc' = 0$ is true, the method comprises accepting the candidate software update, and installing the candidate software update on the computing device. That is, the candidate software update is the updated software of the software system, i.e. the software system determines whether to update itself with the candidate software update.

This aspect of the invention is advantageous in that the software system can autonomously accept or reject updates according to certain condition, including, updating those very conditions themselves. Existing formal languages would not permit such an update. These advantages are achieved by virtue of the fact that both the software system and the software update (as well as further, subsequent updates) are expressed in the same formal language and that said formal language is classical, and consistent and decidable, even though it refers to its own sentences and their logical relations, what might suspect as impossible due to above Tarski's result. Specifically, this is achievable in the disclosed method by virtue of the fact that sentences in the base logic (base formal language) are abstracted to be seen merely as Boolean algebra elements (or slightly beyond). Here and throughout, the defined extended formal language benefits from being consistent and decidable.

The disclosed method extends to a consideration of a plurality of extended formal languages, as defined above.

As is known in the art, in logic and computer science, a formal language is a language with mathematically precise construction rules, e.g. a programming language. Logic can be considered a formal language in the sense that it provides a framework for expressing and reasoning about propositions and their relationships. In (mathematical) logic, a sentence (or closed formula) of a predicate logic well-formed formula with no free variables. Herein, a sentence is regarded as expressing a set of models in which the sentence holds. It is important to note that we regard Boolean algebras in their full generality, and not only the algebra of binary values.

'Logical equivalence' is a well-defined term in this context. As will be understood by the skilled person, two statements are logically equivalent if they have the same truth value in every model, where, in model theory, a structure consists of a set along with a collection of functions and relations that are defined on it. 'Logical equivalence class' will be similarly well understood by the skilled person, e.g. see Equivalence class - Wikipedia.

It will be understood from the above context that elements of a Boolean Algebra herein are logical sentences up to logical equivalence. This is commonly referred to as Lindenbaum-Tarski Algebra.

References to the first order theory of Boolean Algebra, and to Boolean Algebras that are elementarily equivalent, will be well understood by the skilled person, e.g. see List of first-order theories - Wikipedia. References to many-sorted logic will also be understood, e.g. see Many-sorted logic - Wikipedia. Furthermore, references to a signature of Boolean Algebra will be similarly well understood by the skilled person, e.g. see Signature (logic) - Wikipedia.

The Boolean Algebra of each base formal language may be atomless.

The Boolean Algebras of the extended formal language and each base formal language may be isomorphic.

The condition specified by the condition element c may be a combination of different individual conditions each requiring to be satisfied for the candidate software update to be validated and accepted.

The candidate software update may include an update to the condition element c.

If the candidate software update is accepted then the step of installing the candidate software update on the computing device may comprise replacing the condition element c with an updated condition element d, in the extended formal language, specifying an updated condition to validate a subsequent candidate software update. The updated condition element d may be recited explicitly in the extended formal language, or it may be implied from the extended formal language describing the updated software system.

The method may comprise receiving the subsequent candidate software update for the software system, wherein the subsequent candidate software update is expressed in the extended formal language. Here, the software system may have been updated with the candidate software update. In this way, the software system may be regarded as the updated software system. The method may comprise computing a truth value for $ud' = 0$ in the extended formal language, wherein $ud'$ is the logical conjunction of u with the logical negation of d. In accordance with a determination that $ud' = 0$ is false, the method may comprise rejecting the subsequent candidate software update. In accordance with a determination that $ud' = 0$ is true, the method may comprise accepting the subsequent candidate software update, and may comprise installing the subsequent candidate software update on the computing device.

In some examples, if $uc' = 0$ is false, then the method may comprise identifying a modified software update, that is a modification of the candidate software update. The modified software update may correspond to a logically maximal sentence v, that logically entails the update sentence u, and that satisfies $vc'=0$, wherein $vc'$ is the logical conjunction of v with the logical negation of c. In such examples, the method may comprise accepting the modified software update, and installing the modified software update on the computing device. In some examples, the modified software update may be accepted only if there is a unique logically maximal sentence that logically entails the update sentence u.

In some examples, prior to the step of computing the truth value for $uc' = 0$ in the extended formal language, the method may comprise modifying the candidate software update to obtain a further candidate software update corresponding to a further update sentence w in the extended formal language. The further update sentence w may be obtained based on a formula in the extended formal language that relates the update sentence u to the further update sentence w. For instance, a modification defined by the software system may be applied to the received candidate software update, e.g. to preserve user preferences or settings as part of an update. In accordance with a determination that $wc' = 0$ is false, the method may comprise rejecting the further candidate software update. In accordance with a determination that $wc' = 0$ is true, the method may comprise accepting the further candidate software update, and installing the further candidate software update on the computing device. In such an example in which the received candidate software update is modified prior to evaluation, the steps involving an evaluation of the received candidate software update, i.e. $uc' = 0$, may be suppressed or may not be performed.

In another aspect of the present invention there is provided a computer software system for validating software updates to the software system. The software system is implemented or installed on a computing device having one or more processors and memory storing one or more programs configured for execution by the one or more processors. The software system is configured to receive a candidate software update for the software system. Both the software system and the candidate software update are expressed in an extended formal language that is an extension of one or more base formal languages. Sentences in each base formal language, up to logical equivalence, form elements in a Boolean Algebra, that has a falsity element 0 denoting falsity and that has a truth element 1 denoting truth. The extended formal language includes the many-sorted first-order theory of Boolean Algebras interpreted in the Boolean Algebra arising from each base formal language, extended to include a plurality of constant symbols each corresponding to a respective logical equivalence class of sentences in each base formal language. The extended formal language and each base formal language, regarded as Boolean Algebras under logical equivalence, are elementarily equivalent under a signature of Boolean Algebra. The candidate software update corresponds to an update sentence u in the extended formal language.

For a condition element c, in the extended formal language, specifying a condition to validate the candidate software update, the software system is configured to compute a truth value for $uc' = 0$ in the extended formal language. Here, $uc'$ is the logical conjunction of u with the logical negation of c.

In accordance with a determination that $uc' = 0$ is false, the software system is configured to reject the candidate software update. In accordance with a determination that $uc' = 0$ is true, the software system is configured to accept the candidate software update, and configured to install the candidate software update on the computing device in order to update the software system.

When the condition for update is more general than $uc'=0$ but any formula in the extended language relating u and c.

When the condition for update is more general than $uc'=0$, namely it is a disjunction of systems of conditions, each of the form:

$uc[1]=0 ... uc[n]=0$
$u'd[1]=0... u'd[k]=0$
$up[1]!=0 ... up[i]!=0$
$u'q[1]!=0 ... u'q[j]!=0$
or equivalent, whether or not c,d,p,q are single elements or whole formulas, and where the whole condition may or may not contain quantifiers.

Aspects of the invention are advantageous in that truth values for all possible combinations of facts in the knowledge system may be ascertained to determine whether the knowledge system is consistent or whether it includes a contradiction. In particular, this aspect is advantageous in that truth values for all possible combinations of facts may be obtained/determined in a manner that is computationally efficient and that does not need extremely large amounts of memory, i.e. it does not need essentially infinite amounts of processing capacity and memory (unlike what would be the case for previous approaches). Expressed differently, unlike previous approaches, neither the amount of data included in the knowledge system, nor the amount of reasoning performed by the knowledge system, needs to be reduced in order to implement the knowledge system computationally. It is practical to implement the complete knowledge system computationally, i.e. without the need for an essentially infinite database because the facts of the knowledge system are represented in the extended formal language, as defined above, where, in particular, the base logic (base formal language) is extended to include the constant symbols each corresponding to a respective logical equivalence class of sentences in the base formal language, where the sentences can include the facts.

One example of a practical knowledge system, or knowledge representation and reasoning system, is a software system that is a function of inputs to outputs at each point over time. In such an example, there are an infinite number of inputs and outputs. A database of all 'runs' will all be infinite sequences of inputs and corresponding infinite sequences of outputs. This 'infinite' database is not possible to implement computationally (in its entirety) with previous representations of the inputs, outputs, function, etc., and so it is not possible analyse and reason over the entire knowledge system. The present invention provides an approach that allows for implementation of the knowledge system on a computer such that it may be determined whether any particular 'run', e.g. combination of input and output, out of all possible runs, causes a problem. For instance, in an example in which the knowledge system describes a nuclear reactor, is there a run that leads to a serious safety breach of the nuclear reactor.

In accordance with another aspect of the invention there is provided a method of extending a knowledge system to allow or support storing and reasoning over sentences in a same language that the knowledge system supports, the method being performed at a computing device having one or more processors and a memory storing the knowledge system, wherein knowledge in the knowledge system is encoded as sentences in a base formal language. The method comprises storing a plurality of interrelated facts, encoded as knowledge sentences in a base formal language, in the knowledge system, and extending the knowledge sentences to be expressed in an extended formal language that is an extension of the base formal language, wherein sentences in the base formal language, up to logical equivalence, form elements in a Boolean Algebra, that has a falsity element 0 denoting falsity and that has a truth element 1 denoting truth, wherein the extended formal language includes the first-order theory of Boolean Algebras interpreted in the Boolean Algebra arising from the base formal language, extended to include a plurality of constant symbols each corresponding to a respective logical equivalence class of sentences in the base formal language, wherein the extended formal language and the base formal language, regarded as Boolean Algebras under logical equivalence, are elementarily equivalent under a signature of Boolean Algebra. The method comprises executing one or more queries over the knowledge system in the extended formal language. Optionally, the queries are performed using one or more Boolean Algebra methods as described herein. Optionally, the method comprises determining outputs to logical questions, e.g. consistency and entailment, related to the knowledge system, in the extended formal language.

In accordance with another aspect of the invention there is provided a method of validating contract provisions, performed at a computing device having one or more processors and memory storing one or more programs configured for execution by the one or more processors.

The method comprises receiving a contract, specified as a plurality of clauses represented by respective clause sentences. The clause sentences are expressed in an extended formal language that is an extension of one or more base formal languages. Sentences in each base formal language, up to logical equivalence, form elements in a Boolean Algebra, that has a falsity element 0 denoting falsity and that has a truth element 1 denoting truth. The extended formal language includes the many-sorted first-order theory of Boolean Algebras interpreted in the Boolean Algebra arising from each base formal language, extended to include a plurality of constant symbols each corresponding to a respective logical equivalence class of sentences in each base formal language. The extended formal language and each base formal language, regarded as Boolean Algebras under logical equivalence, are elementarily equivalent under a signature of Boolean Algebra.

For each combination of two or more elements in the extended formal language, wherein each combination comprises elements representing respective clause sentences representing respective clauses of the plurality of clauses in the contract, the method comprises evaluating an expression corresponding to the logical conjunction of each of the elements in the combination equals 0. For instance, if the combination comprises two elements, namely, a first element $x$ representing a respective first clause sentence representing a first clause of the plurality of clauses in the contract and a second element $y$ representing a respective second clause sentence representing a respective second clause of the plurality of clauses in the contract, then the expression would be $xy=0$, wherein $xy$ is the logical conjunction of $x$ with the logical conjugation of $y$. Similarly, if the combination comprises three elements, namely, the first and second elements $x$, $y$, and a third element $z$ representing a respective third clause sentence representing a respective third clause of the plurality of clauses in the contract, then the expression would be xyz=0.

In accordance with a determination that there exists a combination of elements satisfying the expression, the method comprises determining that the contract has inconsistent provisions. In accordance with a determination that there is no combination of elements satisfying the expression, the method comprises determining that the contract has consistent provisions.

In accordance with another aspect of the invention there is provided a method of validating commands for an interactive software platform, performed at a computing device having one or more processors and memory storing one or more programs configured for execution by the one or more processors. The method comprises receiving user input, at the software platform, to specify a command for the software platform to perform an action. The method comprises retrieving a plurality of defined validation rules for the software platform, wherein each validation rule, of the plurality of validation rules, is represented by respective validation sentences, wherein the validation sentences are expressed in an extended formal language that is an extension of a base formal language, wherein sentences in the base formal language, up to logical equivalence, form elements in a Boolean Algebra, that has a falsity element 0 denoting falsity and that has a truth element 1 denoting truth, wherein the extended formal language includes the first-order theory of Boolean Algebras interpreted in the Boolean Algebra arising from the base formal language, extended to include a plurality of constant symbols each corresponding to a respective logical equivalence class of sentences in the base formal language, wherein the extended formal language and the base formal language, regarded as Boolean Algebras under logical equivalence, are elementarily equivalent under a signature of Boolean Algebra. The method comprises combining the command and the set of defined validation rules for the software platform to build a formula f in the extended formal language, wherein the formula has one or more logical quantifiers. The method comprises expressing the formula f in disjunctive normal form, with an existential innermost quantifier. The method comprises constructing a new formula g in the extended formal language, wherein the new formula g (i) is logically equivalent to the formula f and (ii) has no quantifiers. The method comprises evaluating the truth of the new formula g. In accordance with a determination that the new formula $g$ is true, the method comprises performing the command. In accordance with a determination that the new formula $g$ is false, the method comprises rejecting the command.

The command may include one or more further validation rules for the software platform. The one or more further validation rules may update one or more of the defined validation rules.

If the command is performed then the defined validation rules may be updated in accordance with the further validation rules to provide updated validation rules, in the extended formal language, for the interactive software platform.

The method may comprise receiving subsequent user input, at the software platform, to specify a subsequent command for the software platform to perform a subsequent action. The method may comprise translating the subsequent command into a formula k in the base formal language, wherein the formula (i) includes one or more logical quantifiers and (ii) is expressed in disjunctive normal form. The method may comprise constructing a new formula $l$ in the extended formal language, wherein the new formula $l$ (i) is logically equivalent to the formula $k$ and (ii) has no quantifiers. The method may comprise evaluating whether the new formula $l$ is consistent with the plurality of updated validation rules for the software platform. In accordance with a determination that the new formula $l$ is consistent with the plurality of updated validation rules for the software platform, the method may perform the subsequent command. In accordance with a determination that the new formula $l$ is not consistent with the plurality of validation rules for the software platform, the method may include rejecting the subsequent command.

In accordance with another aspect of the invention there is provided a non-transitory, computer-readable storage medium storing instructions thereon that, when executed by one or more processors, cause the one or more processors to execute any one or more of the methods defined above.

In accordance with another aspect of the invention, there is provided a software system, implemented or installed on a computing device, configured to perform the steps of any one or more of the methods defined above.

In a general sense, the present invention relates to methods in the field of formal languages and, in particular, the invention provides approaches for solving certain problems expressed in the language of Boolean Algebras (and some of its extensions). The invention provides an approach for extending formal languages with the ability to refer to their own sentences (including in the extended language), determining the truth value of their Boolean combinations, and quantifying over sentences.

BRIEF DESCRIPTION OF THE DRAWINGS

Examples of the invention will now be described with reference to the accompanying drawings, in which:

Figure 1 illustrates using disclosed techniques to validate commands directed to a software platform, in accordance with some embodiments;

Figure 2 is a block diagram of a computing device, in accordance with some embodiments;

Figure 3 provides BNF (Backus Naur Form) productions for the basic syntax of an extended NSO language, in accordance with some embodiments; and

Figure 4 illustrates using disclosed techniques to validate software updates to a software system, in accordance with some embodiments.

DETAILED DESCRIPTION

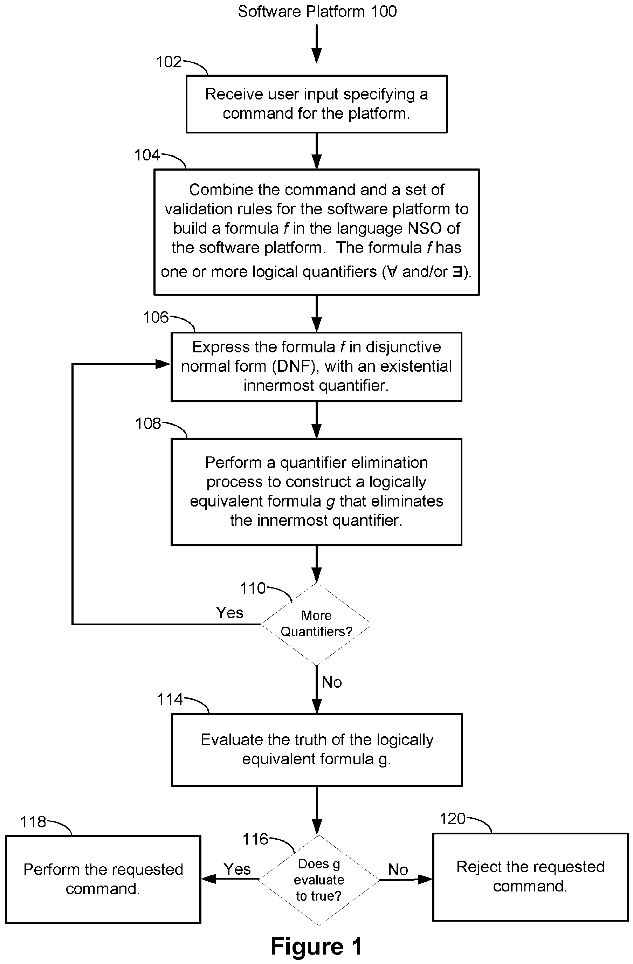

Figure 1 illustrates using disclosed techniques to validate commands directed to a software platform 100 (implemented in an extended formal language, referred to as the NSO language, as will be described below), in accordance with some embodiments. The platform 100 receives (102) a user input specifying a command written in the NSO language to perform some action. In some instances, the command directs the platform 100 to perform a tangible and/or visible command, such as display something on a screen, send a message to a recipient, perform a calculation, or initiate a workflow. In other instances, the command directs the platform 100 to update itself, such as adding or modifying a validation rule 242.

The platform 100 combines (104) the command and a set of validation rules (also in the NSO language) for the software platform to build a formula f in the language NSO. The formula f includes (104) one or more logical quantifiers ($\exists$ or $\forall$).

The platform 100 then expresses (106) the formula f in disjunctive normal form (DNF) with an existential innermost quantifier. In some embodiments, this is achieved by converting the formula to either Prenex Normal Form (PNF, consisting of a prefix and a matrix) or to negated PNF, such that the innermost quantifier is existential, then converting the matrix to DNF. In some embodiments, the process identifies the innermost quantifier. If the innermost quantifier is universal, convert it to an existential quantifier by simple negation. Finally, convert everything under the existential quantifier to DNF.

The system then performs (108) a quantifier elimination process to construct a logically equivalent formula g that eliminates the innermost quantifier. This is described below in sections 5 and 6. For example, when the language NSO is an atomless Boolean Algebra, the techniques of section 5 can be applied. This process eliminates the innermost quantifier. The process checks (110) whether there are additional quantifiers. If so, the process repeats steps 106 and 108 to eliminate the next quantifier (after elimination of an identifier, the resulting formula is generally no longer in disjunctive normal form).

When all of the quantifiers have been eliminated, it is a simple matter to evaluate (114) the truth of the formula g. If the formula g does (116) evaluate to true, the software platform performs (118) the requested command. If the formula g does (116) not evaluate to true, the software platform rejects the requested command.

Typically, the validation rules are for security or safety. For example, the platform may refuse to perform an action that would be harmful to others. As noted above, performing the command may entail updating the compatibility rules themselves.

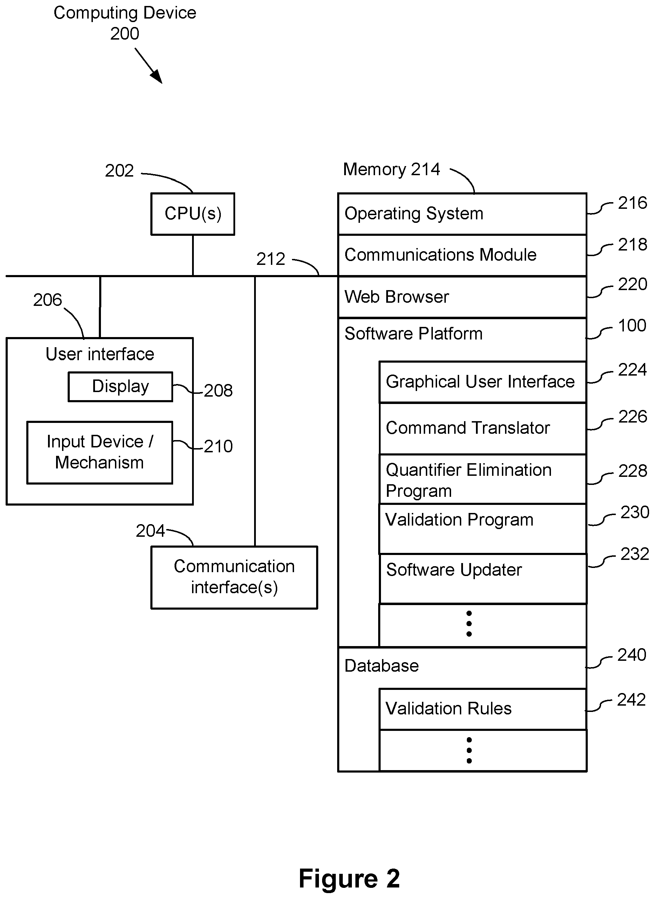

Figure 2 is a block diagram illustrating a computing device 200 that can run a software platform 100 to validate and perform commands. In some embodiments, the computing device displays a graphical user interface 224 for the software platform 100. Computing devices 200 include desktop computers, laptop computers, tablet computers, and other computing devices with a display and a processor capable of running the software platform 100. A computing device 200 typically includes one or more processing units/cores (CPUs) 202 for executing modules, programs, and/or instructions stored in the memory 214 and thereby performing processing operations; one or more network or other communications interfaces 204; memory 214; and one or more communication buses 212 for interconnecting these components. The communication buses 212 may include circuitry that interconnects and controls communications between system components. A computing device 200 includes a user interface 206 comprising a display 208 and one or more input devices or mechanisms 210. In some implementations, the input device/mechanism includes a keyboard. In some implementations, the input device/mechanism includes a "soft" keyboard, which is displayed as needed on the display 208, enabling a user to "press keys" that appear on the display 208. In some implementations, the display 208 and input device / mechanism 210 comprise a touch screen display (also called a touch sensitive display). In some implementations, the display is an integrated part of the computing device 200. In some implementations, the display is a separate display device.

In some embodiments, the memory 214 includes high-speed random-access memory, such as DRAM, SRAM, DDR RAM or other random-access solid-state memory devices. In some embodiments, the memory 214 includes non-volatile memory, such as one or more magnetic disk storage devices, optical disk storage devices, flash memory devices, or other non-volatile solid-state storage devices. In some embodiments, the memory 214 includes one or more storage devices remotely located from the CPUs 202. The memory 214, or alternatively the non-volatile memory devices within the memory 214, comprises a non-transitory computer-readable storage medium. In some embodiments, the memory 214, or the computer-readable storage medium of the memory 214, stores the following programs, modules, and data structures, or a subset thereof:

- an operating system 216, which includes procedures for handling various basic system services and for performing hardware dependent tasks;
- a communication module 218, which is used for connecting the computing device 200 to other computers and devices via the one or more communication network interfaces 204 (wired or wireless) and one or more communication networks, such as the Internet, other wide area networks, local area networks, metropolitan area networks, and so on;

- a web browser 220 (or other client application), which enables a user to communicate over a network with remote computers or devices;
- a software platform 100, which may have a graphical user interface 224 for validating and performing commands. In some embodiments, the software platform includes:

  ○ a command translator 226, which translates a user command into an internal formal language;
  ○ a quantifier elimination program 228, which implements the techniques described in sections 5 and/or 6 below;
  ○ a validation program 230, which validates commands against a set of validation rules 242; and
  ○ a software updater, which updates the software platform when a specified update is consistent with the pre-existing rules; and

- One or more databases 240, which store data, such as a set of current validation rules.

Each of the above identified executable modules, applications, or set of procedures may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise re-arranged in various embodiments. In some embodiments, the memory 214 stores a subset of the modules and data structures identified above. In some embodiments, the memory 214 stores additional modules or data structures not described above.

Although Figure 2 shows a computing device 200, Figure 2 is intended more as functional description of the various features that may be present rather than as a structural schematic of the embodiments described herein. In practice, and as recognized by those of ordinary skill in the art, items shown separately could be combined and some items could be separated.

## 1 - Background

Automated theorem proving and equation solving is of widespread use in engineering, such as the markets of Formal Methods (e.g., Formal Verification), Knowledge Representation and Reasoning (KRR), Artificial Intelligence (AI), and more. It is useful to find algorithms that allow solving and/or determining the existence of solutions and/or truth values of statements in various formal languages. This application uses the language of Boolean Algebras under some generalized definitions of such a language and presents various methods to solve problems that can be expressed in Boolean Algebras. The techniques can be used in all of the above industries, as well as more.

Decidability of the standard theory of Boolean Algebra was addressed long ago by Tarski. Decision methods here utilize extensions of the standard theory, including:

1) Allowing constants to be arbitrary elements and not limited to the values 0 and 1;
2) Quantification over Boolean Functions, Simple Boolean Functions, and their higher order counterparts;
3) Finding an explicit zero of a Boolean function;
4) Optimization of Boolean functions with respect to cardinality and the order induced by the Boolean Algebra;
5) Quantifier elimination;
6) Cartesian products;
7) Homomorphisms;
8) Converse of binary relations.

## 2 - Terminology, Notation, and Basic Definitions

A Boolean Ring is a ring with unity satisfying $xx = x$ for each element x. A Boolean Function (BF) is a polynomial over a Boolean Ring. If the coefficients of a Boolean Function are only 0 or 1, then it is called a Simple Boolean Function (SBF). A Boolean Algebra is a Boolean ring, where the operations are $\wedge$, $\vee$, and '. These operations are interpreted in the language of rings as xAy = xy, xvy = x+y+xy, and x' = 1+x. Similarly x+y = xy'vx'y. Note that the symbol "+" denotes the symmetric difference, which corresponds to an exclusive OR (XOR).

The symbols $\wedge$ and $\vee$ are also used as logical connectives. The usage as operations or logical connectives will be clear from the context. For example, in $x \vee y = 0 \vee y \neq 0$ the first "v" is a function symbol in the theory of Boolean Algebra and the second "v" is a logical connective.

The Boolean derivative of a Boolean Function defined by $\partial f(x)/\partial x = f(0) + f(1)$.

A minterm in n variables, denoted by $X^A$, is a product $x_1^{a_1} x_2^{a_2} \dots x_n^{a_n}$, where $A \in \{0, 1\}^n$ is a tuple $A = a_1, \dots, a_n$ and $x_i^{a_i} = x_i$ when $a_i = 1$ and $x_i^{a_i} = x_i'$ when $a_i = 0$. It is well known that any Boolean Function can be written as a sum (equivalently, disjunction) of minterms multiplied by respective constant coefficients. As used herein, this is referred to as a "minterm normal form," although some authors refer this as "canonical DNF." The term "minterm" might be consider a minterm coupled with a constant coefficient, as should be clear from the context.

The [first order] theory of Boolean Algebra is always considered interpreted in some specific Boolean Algebra, and the language is extended with constant symbols for all Boolean Algebra elements. The interpretation matches each constant symbol to its corresponding Boolean Algebra element. This is different from other common authors on the subject. Commonly, authors consider the first order theory of Boolean Algebras (whether generic or specific or certain classes thereof), where the only constant symbols are 0 and 1. This application deals with a quantified system of equations and inequations. While in other authors' formalisms the atomic formulas are of the form "some Simple Boolean Function equals zero," the present application deals with the more general construct of determining when "some Boolean Function equals zero."

Further the present application considers the many-sorted theory of Boolean Algebras. That is, fix some Boolean Algebras, and obtain the first order theory in which each variable has a type that denotes the Boolean Algebra it should come from (it is also easy to not require explicit typing and interpret the formula mutatis mutandis). Such a theory is interpreted in a product of structures (e.g., considering only theories interpreted in given structures, and that, without loss of generality). Variables and constants in a single atomic formula may refer only to one Boolean Algebra, but a combination of atomic formulae from various Boolean Algebras is possible.

As customary, it is possible to define a partial order in Boolean Algebras by defining $x \leq y$ if and only if $xy = x$. An element a is defined to be an atom if $0 \leq x \leq a$ implies $x = 0$ or $x = a$, for all x in the Boolean Algebra. A Boolean Algebra is atomless if it has no atoms.

As an example of the above, pick an atomless Boolean Algebra such as the finite unions of left-closed-right-open intervals over the rational numbers. Boolean Functions in this algebra have coefficients that are written in some explicit form, such as [a, b), where a and b are rational numbers. An example of a first order formula (in the disclosed generalized fashion) is $\forall x \exists y.[1, 2)'x \neq [0.1, 6.8) \vee y$.

It is sometimes useful to refer to Boolean Algebra elements as sets (e.g., when speaking about their cardinality). Such a representation is guaranteed by Stone's Representation Theorem for Boolean Algebras. In fact, an equivalent way to define Boolean Algebras is as a set of sets that are closed under finite unions, finite intersections, and complementation. Every power set is therefore a Boolean Algebra, but there are Boolean algebras that are not power sets. Such latter Boolean Algebras must be infinite.

Just as Boolean Functions can have minterm normal form as above, formulas can also have a similar form. Any atomic formula has the form f (X) = 0, so writing f as a disjunction of minterms enables considering only atomic formulas of the form XA = 0, since x v y = 0 is same as $x = 0 \wedge y = 0$.

## 3 - Method of Finding a Zero of a Formula

Consider a Boolean Function in Boole normal form (sometimes called Shannon's decomposition). This can be written as f (x, X) = xg (X) + x'h (X) or equivalently f (x, X) = xg (X) v x'h (X), where X is a tuple of n variables. Assuming it has a zero, Boole's consistency condition holds:

$$\left[ \bigwedge_{x \in \{0,1\}} \bigwedge_{X \in \{0,1\}^n} f(x, X) \right] = 0$$

A specific zero is identified inductively as follows. Let Z be a zero of g (Z) h (Z) (which is guaranteed to exist by Boole's consistency condition). Then both f (h (Z) ,Z) = 0 and f (g' (Z) ,Z) = 0. Therefore, one zero can be found inductively by choosing one of those two arbitrarily (or by choosing the shortest case or any other optimization). Finding a single zero allows to then characterize all zeros by Lowenheim's General Reproductive Solution.

### 4 - Optimization Methods

Determining whether $|f(x)| = n$ has a solution for some Boolean Function f and finding its minimum and maximum cardinalities (which happen to coincide with minima and maxima induced by the Boolean Algebra) can be performed as follows.

The equation $|f(x)| = n$ has a solution if and only if $|f(0) f(1)| \le n \le |f(0) \vee f(1)|$. More generally, let $f(x)$ be a Boolean Function. Then the minimum of $|f(x)|$ (as well as its minimum with respect to the order induced by the Boolean Algebra, which happens to always exist) is attained precisely when $f(0) f'(1) \le x \le f(0) \vee f'(1)$ and the maximum precisely when $f'(0) f(1) \le x \le f'(0) \vee f(1)$.

### 5 - Quantifier Elimination Method in Atomless Boolean Algebras

Consider a formula in disjunctive normal form (DNF):

$$\exists x. \bigvee_i \left( \bigwedge_j [f_{ij}(x, X) = 0] \wedge \bigwedge_k [g_{ik}(x, X) \ne 0] \right)$$

where each $f_{ij}$ and $g_{ik}$ is a Boolean Function (not necessarily a Simple Boolean Function), interpreted in some fixed atomless Boolean Algebra (it is fixed so that the constants that are not 0 or 1 are correctly interpreted). First, convert it to the form:

$$\exists x. \bigvee_i \left( [f_i(x, X) = 0] \wedge \bigwedge_k [g_{ik}(x, X) \ne 0] \right)$$

(where the f's are not the original ones) by noting that

$$\left[ \bigwedge_i h_i(X) = 0 \right] \text{ if and only if } \left[ \bigvee_i h_i(X) \right] = 0$$

for all Boolean Functions $h_i$, as is well known. The resulting formula is logically equivalent to each of the following:

$$\bigvee_i \left[ f_i(0, X) f_i(1, X) = 0 \wedge \bigwedge_k \left( g_{ik}(f_i(0, X), X) \vee g_{ik}([f_i(1, X)]', X) \right) \right]$$

and

$$\bigvee_i \left[ f_i(0, X) f_i(1, X) = 0 \wedge \bigwedge_k \left( g_{ik}(0, X) g_{ik}(1, x) \to \frac{\partial [f_i(x, X)]' g_{ik}(x, X)}{\partial x} \right) \ne 0 \right]$$

### 6 - Quantifier Elimination Method in Boolean Algebras having Atomic Elements

Existential quantifiers can be eliminated in Boolean Algebras with atomic elements as well. In this case, each element may be written as a (possibly infinite) disjunction of atoms. Powerset algebras are the main example of such algebras. Note that cardinality here coincides with the number of distinct atoms required to construct a given element.

First bring the formula to the form

$$\exists x. \bigvee_i \left( [f_i(x, X) = 0] \wedge \bigwedge_k [g_{ik}(x, X) \neq 0] \right)$$

Then, as in the previous section, rewrite this as

$$\bigvee_i \left[ [f_i(0, X) f_i(1, X) = 0] \wedge \exists x. \bigwedge_k [g_{ik}(x + f_i(x, X), X) \neq 0] \right]$$

Next, convert this formula to minterm normal form, obtaining a series of inequations of the $a_1 x \neq 0$, $a_2 x \neq 0$, ..., $a_N x \neq 0$, $b_1 x' \neq 0$, $b_2 x' \neq 0$, ..., $b_K x' \neq 0$ by simple conversion into disjunctive normal form (DNF) and noticing that such a conversion does not require negations (only distributing conjunctions and disjunctions over each other), so no inequality is turned into equality. Note that $a_i$ and $b_j$ here are minterms in X, although a more general form is also suitable in this treatment.

The system $a_1 x \neq 0$, $a_2 x \neq 0$, ..., $a_N x \neq 0$, $b_1 x' \neq 0$, $b_2 x' \neq 0$, ..., $b_K x' \neq 0$ over any Boolean Algebra has a solution if and only if it has a solution of cardinality at most N (and if K is smaller, this can have a solution for x'). The method is to therefore convert the formula to one over a finite Boolean Algebra and possibly subsequently to the two-element Boolean Algebra. When a single quantifier $\exists x$ is to be eliminated, it can therefore be written as log N quantifiers ranging over only 0 and 1, which can in turn be eliminated into disjunctions, therefore yielding a proper quantifier elimination as needed.

Further, let $X^{A_1}$, $X^{A_2}$, ..., $X^{A_m}$ be minterms in n variables, and $b_1$, $b_2$, ..., $b_m$ elements in some Boolean Algebra. A method of determining whether $\exists X. \bigwedge_{i=1}^m [X^{A_i} \geq b_i]$ is to check whether $b_i b_j = 0$ whenever $A_i \neq A_j$. This enables yet another solution method for a system of the form $\exists X. \bigwedge_{i=1}^m [a_i X^{A_i} \neq 0]$ by using Hall's marriage theorem and graph matching algorithms, as it is just determining the existence of a system of disjoint representatives being greater than the $b_i$ values.

## 7 - Cartesian Product Methods

Consider an expression involving $\vee$, $\wedge$, ', $\times$, constants, and variables, where $\times$ is interpreted over the sets underlying the Boolean Algebra elements (as guaranteed by Stone's representation theorem for Boolean Algebras, or alternatively over any Boolean Algebra interpreted over fixed sets). Whenever this expression typechecks so that the Cartesian product of one size (e.g., two elements) cannot interact as is with a cartesian product of a different size (e.g., three elements), well-known identities specify that:

- (ab) × (cd) = (a × c) (b × d)

- (a × b)′ = (a′ × b′) ∨ (a × b′) ∨ (a′ × b)

These (or similar identities widespread in literature) push the "×" to the innermost level in the expression. Then, given a first-order formula, the Boolean Function appearing in each atomic formula can be converted to the form of disjunctions of cartesian products of minterms. This formula can be converted to minterm normal form (or a weaker form based on Disjunctive Normal Form for Boolean Functions). Now pulling out "×" over the conjunctions in each clause, the product equals the empty set if and only if at least one multiplicand is empty, which is a disjunction of formulas without the symbol "×".

Note that this allows the Cartesian product of elements from different Boolean Algebras as in the many-sorted theory of Boolean Algebras.

**8 - Methods for Higher Order Boolean Functions**

It is possible to quantify over Boolean Functions, Simple Boolean Functions, and certain Conditional Boolean Functions (as below), and their higher order counterparts, and obtain an equivalent formula without quantification over functions, using the following method. Consider a formula involving existential (or universal, mutatis mutandis) quantification ∃f over such functions. Each Boolean Function of n variables can be written as a Boolean expression involving 2^n constants (e.g., by using Boole's normal form, algebraic normal form, or minterm normal form, per subexpression, considering a single variable, or over the whole expression, considering all variables). In this way, quantification over Boolean Functions is converted into 2^n first order quantifiers. Similarly, for Simple Boolean Functions, quantity over constants and require them to be either 0 or 1. A Conditional Boolean Function is a Boolean expression that involves the ceiling function, defined by ceil(0) = 0 and ceil(x) = 1 for all Boolean Algebra elements $x \neq 0$. Even more generally, a formula in the language of the Boolean Algebra is interpreted as the values 0 or 1 in the Boolean Algebra (which is the same as allowing quantifiers and equality/inequality under the ceiling function). In their full generality, Conditional Boolean Functions may involve unboundedly many coefficients. Restricting them, (e.g., by requiring that expressions under the ceiling function (or in formulas) must be Simple Boolean Functions, or requiring constants to be taken from some fixed finite set), allows quantifier elimination into first order in the same fashion as above.

Higher order functions (Boolean Functions, Simple Boolean Functions, and restricted Conditional Boolean Functions) are seen as operating over the coefficients of their input (possibly higher order) functions and returning coefficients, and are therefore translated accordingly. Therefore, a higher order function that takes a Boolean Function of n variables and returns a Boolean Function of n variables, will be written as a function that takes 2^n Boolean Algebra elements and returns 2^n elements, with all necessary adjustment for all cases, mutatis mutandis, and similarly for a function that takes a function of functions, and so on.

For efficiency, there is no need to expand the formula exponentially (or a tower of exponentials) right at the beginning, but it can be done step-by-step with opportunities for simplifications and eliminations in each step, in the following fashion. First, a quantifier over a Boolean Function of n variables can be converted to a quantification over two Boolean Algebra elements and over two Boolean Functions over n - 1 variables, simply by writing down the Boole normal form (or other form, such as Reed-Muller) for the quantified function with respect to one (possibly cleverly chosen) variable.

**9 - Method for Homomorphism Quantifier Elimination**

The many-sorted theory of Boolean Algebra allows interaction between distinct BAs only by means of combining atomic formulae. Even the above Cartesian product that allows mixing different Boolean Algebras still allows a very shallow interaction between them. However, a deeper interaction can be made and is still decidable, using a decision method described now. This is useful not only for interaction between Boolean Algebras, but even as an extension of the theory of a single Boolean Algebra. Further, it trivially has uses (including a decision procedure) in various languages called Description Logics (DLs), which are commonly used in KRR.

It is possible to eliminate quantification over a ring and monoid homomorphisms as long as the quantifier is the innermost quantifier in the formula. A monoid homomorphism is, by definition, is a homomorphism that sends conjunctions in one Boolean Algebra to conjunctions in another Boolean Algebra, as well as sending zero to zero. A [Boolean] ring homomorphism is a monoid homomorphism that further sends negation to negation. Further, some circumstances require sending one to one, and may require a homomorphism to be injective and/or surjective. This is possible by suitable treatment of what 0 and 1 are being sent to and from, and recalling that a homomorphism is injective if and only if the only element sent to 0 is 0.

Quantifier elimination of such homomorphisms is done as follows. Given a formula of the form:

$$\exists M_1, \dots, M_n, \exists H_1, \dots, H_n$$

$$f(X) = 0 \ \wedge \ \bigwedge_j g_j(X) \neq 0 \ \wedge \ \bigwedge_{(i,j,k) \in I} x_i = M_j(x_k) \wedge \bigwedge_{(i,j,k) \in J} x_i = H_j(x_k)$$

where $X = x_1, x_2, \dots$ is a tuple of variables, $f$ and $g_j$ are Boolean Functions, the M's are monoid homomorphisms, the H's are ring (Boolean Algebra) homomorphisms, and the order of quantifiers does not matter. First, modify the monoid homomorphisms to ones that distribute over disjunctions rather conjunctions. In particular, introduce $N_j(x) := M_j'(x')$. Now write each $x_k$ as a disjunction of minterms (or any other disjoint partition), and obtain a system of the form:

$$\exists N_1, \dots, N_n, \exists H_1, \dots, H_n$$

$$f(X) = 0 \;\wedge\; \bigwedge_j g_j(X) \neq 0 \;\wedge\; \bigwedge_{(i,j,k)\in I'} x_i = N_j(y_k) \;\wedge\; \bigwedge_{(i,j,k)\in J'} x_i = H_j(y_k)$$

where the y's are Boolean combinations of the x's such that $y_i y_j = 0$ whenever $i \neq j$. Note that even though this system looks similar to the original system, it is still very different. For example, if there are only two variables x and y and one equation x = N (y), write y as disjunction of minterms x = N (xy v x'y), which is same as x = N (xy) v N (x'y), and finally $x_1$ = N (xy), $x_2$ = N (x'y), and x = $x_1 \vee x_2$.

Now replace the equations involving the homomorphisms M and H by saying that M sends zero to zero and interpreting f (X) = 0 to mean that certain $y_k$ elements have to equal zero (as can trivially be done if *f* is in minterm normal form), and H sends zero to zero as well as disjoint y's to disjoint x's. The resulting formula is logically equivalent to the original one while the homomorphism quantifiers are eliminated.

## 10 - Converse Algebras

Consider a special case of Tarski's Calculus of Relations as follows. Consider the powerset algebra of sets of pairs over some domain D. The algebra is P (D $\times$ D). Consider the theory of Boolean Algebra of this algebra enhanced with another operation R⁻ taking a binary relation R to its converse (aka inverse or transpose). That is $\forall xy.Rxy \leftrightarrow$ R⁻yx.

Consider two such algebras: general and diagonal-free. Diagonal-free means that no binary relation has a diagonal, namely $\forall x.\neg Rxx$. Complementation is then understood correspondingly, taking the complement but leaving the diagonal yet empty. In the general case $R_d$ denotes the diagonal of R, and $R_{-d}$ is $(R_d)'$ R. A polynomial is any finite combination of elements by means of Boolean operations and converse. Described now is a method to determine whether such a polynomial has a zero.

A converse algebra is defined as "complete" if every diagonal-free relation has a maximal asymmetric part. Every powerset algebra as defined above is complete, and the method extends to other complete converse algebras as well.

Note that a polynomial in R is a Boolean Function of the form f (R,R⁻). Put A = f (1, 1), B = f (1, 0), C = f (0, 1), and D = f (0, 0). Then a method to determine whether $\exists$R.f (R,R⁻) = 0 is to check whether (A v A⁻) (B v C⁻) (C v B⁻) (D v D⁻) = 0, and this for diagonal-free algebras only. In this case any R = A'A⁻' v T is a solution, where T is a maximal asymmetric part of B'C⁻'.

For the general case, consider an even more generalized problem of a function that depends also on the diagonal. The general form of such a function is:

$$f(R_d, R, R^-) = AR_d + BRR^- R_d' + CRR^{-\prime} + DR'R^- + ER'R^{-\prime}$$

A method to determine whether $\exists$R.f ($R_d$,R,R⁻) = 0 is to check whether $A_d E_d$ = 0 and

$$(B \vee B^-)(C \vee D^-)(C^- \vee D)E_{-d} = 0$$

## 11 - Designing Logical Languages

Designing logical or formal languages with the ability to refer to truth of their own sentences is a long journey in the field of mathematical and philosophical logic. The results in this area are mainly negative: in a certain yet very wide sense, it is impossible to include statements about truth in a language, about statements in the same language, while keeping the language consistent. The inclusion of such truth reference allows languages to express paradoxes. Maybe the most well-known result of this nature is Tarski's Undefinability of Truth.

In this age of computing, such an inability becomes a practical limitation. One formal language cannot refer to whether another statement in that language is true, or whether one sentence entails the other, as well as similar logical questions that come down to speaking about truth. Many remedies were proposed in the literature (e.g., paraconsistent and many-valued logics), but they are all of the nature of allowing languages to contain paradoxes, and by that rendering the languages to be so-called "nonclassical logics". In those languages, it is therefore no longer the case that every precise statement is either true or false (in a given model if such a setting even has a model theory) in the classical sense.

It is widely believed, albeit not proved, that classical logics cannot have a truth predicate. This application presents a method to extend virtually any language with an ability to refer to truth of other sentences, as well as quantify over its own sentences, while maintaining the original language (here the "base logic" or "base formal language") classical and consistent. Even more surprisingly, the construction typically preserves decidability, so if the base logic is decidable, so is the extended (formal) language. This avoids Tarski's impossibility result by not allowing a syntactic representation of sentences as Tarski requires, but treating them purely semantically, and further allowing only certain operations over them.

Specifically, consider the Lindenbaum-Tarski Algebra (LTA) of some language L. It is the Boolean Algebra (BA) generated by sentences (or formulas) in L, up to logical equivalence. Therefore, it is assumed that L makes a Boolean Algebra. In some embodiments, this Boolean Algebra is further assumed to be atomless. In particular, virtually any language over an infinite signature that makes a Boolean Algebra, makes an atomless one.

The method is as follows: consider the first-order theory of Boolean Algebra interpreted in that Boolean Algebra and extended with a respective constant symbol corresponding to each Boolean Algebra element. In other words, the constants are nothing but formulas in the base logic. The resulting language is trivially consistent and classical, just like the first order theory of any Boolean Algebra. Referring to unsatisfiability and tautology (being the above truth predicates) are simply asking whether a constant or a variable equals zero or one. Further it is possible to quantify over formulas as usual quantification of Boolean Algebra elements.

So far, this creates one language that may speak of another language, but still not about itself. Languages speaking about truth of sentences in other languages is the only known remedy, and it is the widely used common practice for defining and referring to truth (albeit typically not via a Boolean Algebra). However, there are additional steps to elevate this Boolean Algebra construction into a language that speaks about itself.

For that, the first-order theory of the Boolean Algebra can be the LTA of L and have itself an LTA that is elementarily equivalent to the Boolean Algebra of L. A simple case is when the Boolean Algebra is atomless, because all atomless Boolean Algebras are elementarily equivalent (and so are all infinite atomic Boolean Algebras), as demonstrated by Tarski. For that, simply enhance the extended language with infinitely many relation or function symbols. There are many ways, artificial or not, to do so. Some of those employ methods described above: enhancing the signature with homomorphism symbols that do not fall under quantifiers, or Boolean Functions and higher-order Boolean Function symbols in the signature. In an even more extended language (e.g., used for software specification), the atomless property may be obtained by allowing infinitely many input and output streams.

This methodology creates a logic that speaks about truth of its own sentences as well as quantifying over its own sentences. Further, there are infinitely many such logics, one per choice of base logics. Constants, however, need to be from the extended language. This is described in the construction below.

The section below gives a more precise description of the construction. This considers extending many languages at once, and it is a feature of construction to allow languages to co-exist in a novel method of combining logics.

## 12 - The Language NSO

Fix a set of languages (the "base logics", which need not be related in any way) in which their formulas make a Boolean Algebra. (The formulas are considered up to logical equivalence, in which case it's called the LTA (Lindenbaum-Tarski Algebra) of the language, or by any other equivalence relation of choice.) Then it is possible to consider the many-sorted Boolean Algebra theory of those Boolean Algebras. Constants in that language are formulas (or sentences) in the base logics. Quantification takes the same semantics of quantification over arbitrary Boolean Algebra elements. If the base logics make an atomless Boolean Algebra, then the extended language has decidable satisfiability if and only if the base logics have decidable satisfiability. Otherwise, decidable model counting is required. More precisely, when seen as a Boolean Algebra, it is necessary to know whether an element is a disjunction of at least n distinct atoms.

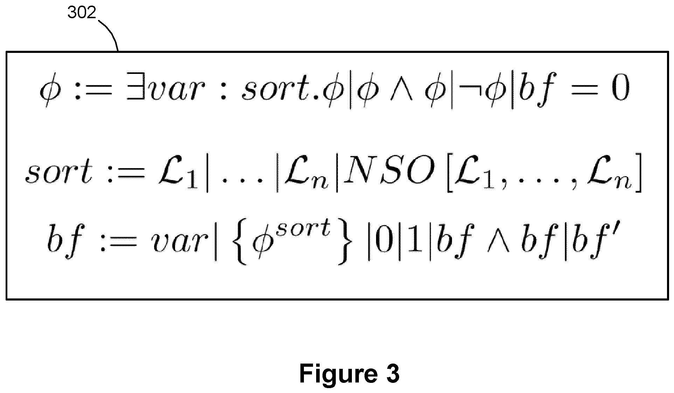

Denote the extended language by NSO [Li, ... ,$L_n$], where NSO stands for Nullary Second Order (though not under the usual semantics of nullary relations). It is possible to obtain a language that quantifies over its own formulas (quotiented by logical equivalence) as follows. First, NSO [Li, ... ,$L_n$] can already quantify over formulas in $L_1$, ... ,$L_n$ in the standard fashion of quantification in a Boolean Algebra. In this setting, each NSO formula is either true or false, because it is interpreted in a fixed model (being the Boolean Algebra that is the LTA of the base logic), and therefore makes a small (only two-element) Boolean Algebra. This is typically still far from being elementarily equivalent to the Boolean Algebra of the base logics. To obtain a richer Boolean Algebra from formulas in NSO [Li, ... ,$L_n$], it can be enhanced with infinitely many relation and/or function symbols, possibly in a decidability preserving fashion (e.g., in the ways mentioned above). Assume NSO [$L_1$, ... ,$L_n$] is properly extended such that it now makes an atomless Boolean Algebra (and other kinds of Boolean Algebras are treated similarly). Constants now may be formulas in NSO [$L_1$, ... ,$L_n$] appearing inside curly brackets in order to avoid syntactic ambiguity. Handling of quantifiers for the sake of a decision procedure can be done by means of the above quantifier elimination decision methods described in sections 5 and 6 above. The basic syntax of NSO [$L_1$, ... ,$L_n$] (before being extended in any way that makes it an atomless Boolean Algebra) can be expressed as a set of three BNF productions, as shown in the box 302 in Figure 3.

In these productions, $\phi^{\mathcal{L}}$ means any formula in the language L. Each *bf* may only contain variables and constants from the same sort. The deep-most level of formulas in [nested] curly brackets will be either a formula in $L_1$, ... ,$L_n$ or a formula in the language of Boolean Algebra where the only constants appearing the formula are either 0 or 1. It is then interpreted as a formula over arbitrary atomless Boolean Algebras because they are all elementarily equivalent.

## 13 - Example of Software Update

Suppose a software system has an auto-update feature. It downloads an update (e.g. from a remote server over a wireless network), performs certain checks on the new code (the update), and if the checks pass, installs it. It is useful to have the current software and the update written in the same (formal) language. Otherwise there is a need for many (formal) languages (one for each update). If the checks are of the form of logical implication (e.g., "if the new code implies that private data is sent over the network then reject the update"), then there is a language that speaks about consistency of Boolean combination of sentences in the same language. No previously existing language can support that. But with NSO, it takes the form $uc' = 0$ where u is the update and c is a condition, and the formula is true if and only if u implies c.

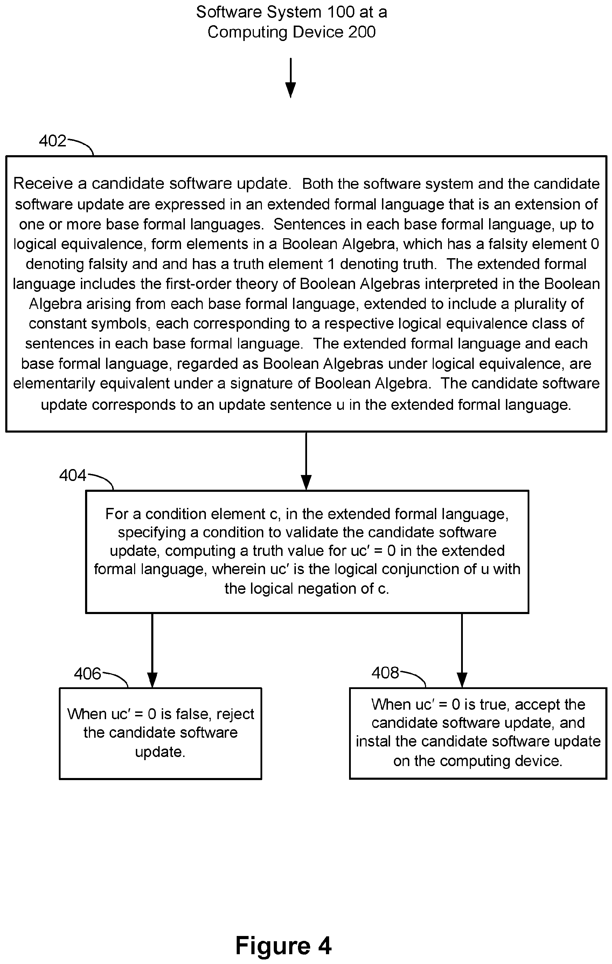

In accordance with an example of the invention, there is therefore provided a method of validating software updates as part of an automatic update feature of the software system 100. The method is performed by the software system 100 installed on the computing device 200. Figure 4 summarises the steps of the method. A first step 402 of the method involves receiving or downloading a so-called candidate software update for the software system 100. Here, both the software system 100 and the candidate software update are expressed in an extended formal language, e.g. NSO, that is an extension of one or more base formal languages. The base formal language can be any suitable formal language, which may be known. The extended formal language is obtained or defined as described above. In particular, the base formal language is extended to include a plurality of constant symbols each corresponding to a respective logical equivalence class of sentences in the base formal language. Here, the extended formal language and each base formal language, regarded as Boolean Algebras under logical equivalence, are elementarily equivalent under a signature of Boolean Algebra.

As defined above, the candidate software update corresponds to an update sentence u in the extended formal language. At a next step 404 of the method, the software system 100 computes a truth value, i.e. 0 or 1, for $uc' = 0$ in the extended formal language. That is, the expression $uc' = 0$ is evaluated. Here, the condition element c, in the extended formal language, specifies a condition to validate the candidate software update, and $uc'$ is the logical conjunction of u with the logical negation of c.

In a next step 406 of the method, the candidate software update is rejected if $uc' = 0$ is determined to be false. On the other hand, if $uc' = 0$ is determined to be true, then the method involves, at step 408, accepting the candidate software update, and installing the candidate software update on the computing device 200, in particular to update the software system 100.

The present method benefits from supporting or allowing a candidate software update that includes an update to the condition element c that the update must satisfy for it to be acceptable. Indeed, if the update is deemed to be acceptable, and is therefore installed, then the condition element is updated such that subsequent candidate software updates are evaluated against the updated condition to determine if the subsequent update is acceptable for installation.

In an example in which the candidate software update is rejected, then the method may comprise determining whether a modified version of the candidate software update can be accepted (and installed). For instance, a candidate software update may include parts i, ii, iii, and it may be determined that part iii contradicts the condition to be satisfied for the candidate software update to be acceptable. Parts i and ii may however not contradict the condition, in which case the software system may modify the candidate software update to only include parts i and ii, and instead install this modified version of the software update. In the extended formal language, the modified software update may correspond to a logically maximal sentence v, that logically entails the update sentence u, and that satisfies $vc'=0$, wherein $vc'$ is the logical conjunction of v with the logical negation of the condition c. Here, it is noted that the skilled person would understand that logical entailment and logical maximum are well defined in mathematical logic.

The present method benefits from allowing the software system 100 to make modifications or adjustments to a received candidate software update prior to evaluating the update against the conditions to be satisfied. That is the method may involve modifying a received candidate software update to obtain a further candidate software update corresponding to a further update sentence w in the extended formal language. Here, the further update sentence w is obtained based on a suitable formula in the extended formal language that relates the update sentence u to the further update sentence w. The modification may be of any suitable form, and may be for any suitable purpose. The modification could be to narrow or extend the scope of the software update in a particular way, e.g. to attempt to ensure that the (modified) update satisfies the condition in order to permit installation thereof.

Many modifications may be made to the described examples without departing from the scope of the appended claims.

The methods disclosed herein may be applied to various problems. In one example, the methods can be implemented computationally to determine whether a contract has clauses that inconsistent. The disclosed methods are also applicable to software specifications. When undertaking large software development projects, it is crucial to start by writing down a detailed description, or documentation, of the functional and non-functional requirements, constraints, and behaviours of a software system. These specifications serve as a blueprint or a contract between stakeholders, such as software developers, designers, project managers, and clients, to ensure that everyone has a clear understanding of what the software is supposed to do and how it should behave. A team of software developers then takes these software specifications, or specs for short, and turns them into step-by-step instructions for computers to execute. This is the normal software development process. This last step may be executed by first expressing all the specifications in NSO language specifications as described above. An interpreter is then able to "execute" the specification directly. The obtained specifications are the program(s) to be executed.

The disclosed methods are also applicable to computer security. The main challenge in computer security is often evolving a computer system while preserving its security and integrity. This is very hard to do in a computer system defined using procedural languages, as one would have to consider the possible execution of all the procedures in any order and on a large range of inputs. This is a practically impossible task. In contrast, a software system built on specifications as described above is guaranteed to maintain its security after each alteration or new functionality is added because all system specs and constraints are automatically maintained by the run-time of the disclosed system.

The disclosed methods are also applicable to computer-aided design (CAD) systems. CAD systems are a special case of KRR systems specialized in representing and reasoning on mechanical or electrical engineering designs. Here systems often have constraints in terms of required outputs (the performance of the system) while respecting general engineering constraints such maximum stress levels, maximum temperature, electrical currents, etc. All of these requirements and constraints can be captured and maintained as extended formal language specifications, as described above.

As described above, no known knowledge representation and reasoning (KRR) system language (or logic in general) can consistently handle statements in its own language, combining them with other sentences, and referring to whether they contain a contradiction, or entail each other, and so on for other logical questions. The NSO language described herein is the first language capable of doing so, and not only in a consistent way, but even in a decidable way.

One might claim that in the above example, "X said Y" might be stated in some language L1 while the statement Y is in a different language L2, and moreover, L2 being less expressive than L1, so much so, that L1 can interpret L2. Then, what would we say about the statement "X said 'Y said Z'"? We would then need three languages. This is of course completely impractical and even impossible to some extent. In the NSO solution described herein, there is provided languages such that L1=L2, and this is achieved by abstracting sentences to merely Boolean algebra elements (and possibly slightly beyond).

To perform logical tasks in the novel language NSO, novel methods in the field of Boolean algebra have also been described herein. Moreover, NSO is not one language, but a language extension mechanism. By that we get not only one but infinitely many languages that satisfy this unique and novel property. Moreover, NSO can extend many languages at once in the same language, and is therefore also a novel method of combining logics without breaking their consistency and decidability properties.

**Claims**

1. A method of validating software updates, performed by a software system installed on a computing device having one or more processors and memory storing one or more programs configured for execution by the one or more processors, the method comprising:

   receiving a candidate software update for the software system, wherein both the software system and the candidate software update are expressed in an extended formal language that is an extension of one or more base formal languages, wherein sentences in each base formal language, up to logical equivalence, form elements in a Boolean Algebra, that has a falsity element 0 denoting falsity and that has a truth element 1 denoting truth, wherein the extended formal language includes the many-sorted first-order theory of Boolean Algebras interpreted in the Boolean Algebra arising from each base formal language, extended to include a plurality of constant symbols each corresponding to a respective logical equivalence class of sentences in each base formal language, wherein the extended formal language and each base formal language, regarded as Boolean Algebras under logical equivalence, are elementarily equivalent under a signature of Boolean Algebra, wherein the candidate software update corresponds to an update sentence u in the extended formal language;
   for a condition element c, in the extended formal language, specifying a condition to validate the candidate software update, computing a truth value for $uc' = 0$ in the extended formal language, wherein $uc'$ is the logical conjunction of u with the logical negation of c;
   in accordance with a determination that $uc' = 0$ is false, rejecting the candidate software update; and
   in accordance with a determination that $uc' = 0$ is true, accepting the candidate software update, and installing the candidate software update on the computing device.

**2.** A method according to Claim 1, wherein the Boolean Algebra of each base formal language is atomless.

**3.** A method according to Claim 1 or Claim 2, wherein the Boolean Algebras of the extended formal language and each base formal language are isomorphic.

**4.** A method according to any previous claim, wherein the condition specified by the condition element c is a combination of different individual conditions each requiring to be satisfied for the candidate software update to be validated and accepted.

**5.** A method according to any previous claim, wherein the candidate software update includes an update to the condition element c.

**6.** A method according to Claim 5, wherein if the candidate software update is accepted then the step of installing the candidate software update on the computing device comprises the condition element c being replaced with an updated condition element d, in the extended formal language, specifying an updated condition to validate a subsequent candidate software update.

**7.** A method according to Claim 6, the method comprising:

receiving the subsequent candidate software update for the software system, wherein the software system has been updated with the candidate software update, wherein the subsequent candidate software update is expressed in the extended formal language;
computing a truth value for ud' = 0 in the extended formal language, wherein ud' is the logical conjunction of u with the logical negation of d;
in accordance with a determination that ud' = 0 is false, rejecting the subsequent candidate software update; and
in accordance with a determination that ud' = 0 is true, accepting the subsequent candidate software update, and installing the subsequent candidate software update on the computing device.

**8.** A method according to any previous claim, wherein if uc' = 0 is false, then the method comprises:

identifying a modified software update, that is a modification of the candidate software update, wherein the modified software update corresponds a logically maximal sentence v, that logically entails the update sentence u, and that satisfies vc'=0, wherein vc' is the logical conjunction of v with the logical negation of c; and, accepting the modified software update, and installing the modified software update on the computing device.

**9.** A method according to any previous claim, wherein, prior to the step of computing the truth value for uc' = 0 in the extended formal language, the method comprises:

modifying the candidate software update to obtain a further candidate software update corresponding to a further update sentence w in the extended formal language, wherein the further update sentence w is obtained based on a formula in the extended formal language that relates the update sentence u to the further update sentence w;
in accordance with a determination that wc' = 0 is false, rejecting the further candidate software update; and
in accordance with a determination that wc' = 0 is true, accepting the further candidate software update, and installing the further candidate software update on the computing device.

**10.** A non-transitory, computer-readable storage medium storing instructions thereon that, when executed by one or more of the processors of the computing device, cause the one or more processors to execute a method according to any previous claim.

**11.** A software system for validating software updates to the software system, the software system being installed on a computing device having one or more processors and memory storing one or more programs configured for execution by the one or more processors, the software system being configured to:

receive a candidate software update for the software system, wherein both the software system and the candidate software update are expressed in an extended formal language that is an extension of one or more base formal languages, wherein sentences in each base formal language, up to logical equivalence, form elements in a Boolean Algebra, that has a falsity element 0 denoting falsity and that has a truth element 1 denoting truth, wherein the extended formal language includes the many-sorted first-order theory of Boolean Algebras interpreted in the Boolean Algebra arising from each base formal language, extended to include a plurality of constant symbols each corresponding to a respective logical equivalence class of sentences in each base formal language, wherein the extended formal language and each base formal language, regarded as Boolean Algebras under logical equivalence, are elementarily equivalent under a signature of Boolean Algebra, wherein the candidate software update corresponds to an update sentence u in the extended formal language;

for a condition element c, in the extended formal language, specifying a condition to validate the candidate software update, compute a truth value for uc' = 0 in the extended formal language, wherein uc' is the logical conjunction of u with the logical negation of c;

in accordance with a determination that uc' = 0 is false, reject the candidate software update; and

in accordance with a determination that uc' = 0 is true, accept the candidate software update, and install the candidate software update on the computing device.

12. A method of extending a knowledge system to allow or support storing and reasoning over sentences in a same language that the knowledge system supports, the method being performed at a computing device having one or more processors and a memory storing the knowledge system, wherein knowledge in the knowledge system is encoded as sentences in a base formal language, the method comprising:

storing a plurality of interrelated facts, encoded as knowledge sentences in a base formal language, in the knowledge system;

extending the knowledge sentences to be expressed in an extended formal language that is an extension of the base formal language, wherein sentences in the base formal language, up to logical equivalence, form elements in a Boolean Algebra, that has a falsity element 0 denoting falsity and that has a truth element 1 denoting truth, wherein the extended formal language includes the first-order theory of Boolean Algebras interpreted in the Boolean Algebra arising from the base formal language, extended to include a plurality of constant symbols each corresponding to a respective logical equivalence class of sentences in the base formal language, wherein the extended formal language and the base formal language, regarded as Boolean Algebras under logical equivalence, are elementarily equivalent under a signature of Boolean Algebra; and executing one or more queries over the knowledge system in the extended formal language.

13. A method of validating contract provisions, performed at a computing device having one or more processors and memory storing one or more programs configured for execution by the one or more processors, the method comprising:

receiving a contract, specified as a plurality of clauses represented by respective clause sentences, wherein the clause sentences are expressed in an extended formal language that is an extension of one or more base formal languages, wherein sentences in each base formal language, up to logical equivalence, form elements in a Boolean Algebra, that has a falsity element 0 denoting falsity and that has a truth element 1 denoting truth, wherein the extended formal language includes the many-sorted first-order theory of Boolean Algebras interpreted in the Boolean Algebra arising from each base formal language, extended to include a plurality of constant symbols each corresponding to a respective logical equivalence class of sentences in each base formal language, wherein the extended formal language and each base formal language, regarded as Boolean Algebras under logical equivalence, are elementarily equivalent under a signature of Boolean Algebra;

for each combination of two or more elements in the extended formal language, wherein each combination comprises elements representing respective clause sentences representing respective clauses of the plurality of clauses in the contract, evaluating an expression corresponding to the logical conjunction of each of the elements in the combination equals 0;

in accordance with a determination that there exists a combination of elements satisfying the expression, determining that the contract has inconsistent provisions; and

in accordance with a determination that there is no combination of elements satisfying the expression, determining that the contract has consistent provisions.

14. A method of validating commands for an interactive software platform, performed at a computing device having one or more processors and memory storing one or more programs configured for execution by the one or more processors, the method comprising:

receiving user input, at the software platform, to specify a command for the software platform to perform an action; retrieving a plurality of defined validation rules for the software platform, wherein each validation rule, of the plurality of validation rules, is represented by respective validation sentences, wherein the validation sentences are expressed in an extended formal language that is an extension of a base formal language, wherein sentences in the base formal language, up to logical equivalence, form elements in a Boolean Algebra, that has a falsity element 0 denoting falsity and that has a truth element 1 denoting truth, wherein the extended formal language includes the first-order theory of Boolean Algebras interpreted in the Boolean Algebra arising from the base formal language, extended to include a plurality of constant symbols each corresponding to a respective logical equivalence class of sentences in the base formal language, wherein the extended formal language and the base formal language, regarded as Boolean Algebras under logical equivalence, are elementarily equivalent under a signature of Boolean Algebra;

combining the command and the set of defined validation rules for the software platform to build a formula f in the extended formal language, wherein the formula has one or more logical quantifiers;

expressing the formula f in disjunctive normal form, with an existential innermost quantifier;

constructing a new formula g in the extended formal language, wherein the new formula g (i) is logically equivalent to the formula f and (ii) has no quantifiers;

evaluating the truth of the new formula g;

in accordance with a determination that the new formula g is true, performing the command; and

in accordance with a determination that the new formula g is false, rejecting the command.

15. A method according to Claim 14, wherein the command includes one or more further validation rules for the software platform, and wherein the one or more further validation rules update one or more of the defined validation rules.

16. A method according to Claim 15, wherein if the command is performed then the defined validation rules are updated in accordance with the further validation rules to provide updated validation rules, in the extended formal language, for the interactive software platform, and the method comprising:

receiving subsequent user input, at the software platform, to specify a subsequent command for the software platform to perform a subsequent action;

translating the subsequent command into a formula k in the base formal language, wherein the formula (i) includes one or more logical quantifiers and (ii) is expressed in disjunctive normal form;

constructing a new formula l in the extended formal language, wherein the new formula l (i) is logically equivalent to the formula k and (ii) has no quantifiers;

evaluating whether the new formula l is consistent with the plurality of updated validation rules for the software platform;

in accordance with a determination that the new formula l is consistent with the plurality of updated validation rules for the software platform, performing the subsequent command; and

in accordance with a determination that the new formula l is not consistent with the plurality of validation rules for the software platform, rejecting the subsequent command.

Software Platform 100

↓

**102** — Receive user input specifying a command for the platform.

↓

**104** — Combine the command and a set of validation rules for the software platform to build a formula *f* in the language NSO of the software platform. The formula *f* has one or more logical quantifiers (∀ and/or ∃).

↓

**106** — Express the formula *f* in disjunctive normal form (DNF), with an existential innermost quantifier.

↓

**108** — Perform a quantifier elimination process to construct a logically equivalent formula *g* that eliminates the innermost quantifier.

↓

**110** — More Quantifiers?  — Yes →

No ↓

**114** — Evaluate the truth of the logically equivalent formula g.

↓

**116** — Does g evaluate to true?

**118** — Perform the requested command. ← Yes

No → **120** — Reject the requested command.

## Figure 1

Computing Device
200

202

CPU(s)

Memory 214

| Operating System | 216 |
| Communications Module | 218 |
| Web Browser | 220 |

212

206

User interface

Display 208

Input Device /
Mechanism 210

204

Communication
interface(s)

Software Platform — 100

| Graphical User Interface | 224 |
| Command Translator | 226 |
| Quantifier Elimination Program | 228 |
| Validation Program | 230 |
| Software Updater | 232 |
| ⋮ | |

Database — 240

| Validation Rules | 242 |
| ⋮ | |

# Figure 2

$$\phi := \exists var : sort.\phi|\phi \wedge \phi|\neg\phi|bf = 0$$

$$sort := \mathcal{L}_1| \ldots |\mathcal{L}_n|NSO\left[\mathcal{L}_1, \ldots, \mathcal{L}_n\right]$$

$$bf := var| \left\{\phi^{sort}\right\} |0|1|bf \wedge bf|bf'$$

**Figure 3**

Software System 100 at a
Computing Device 200

402 —

Receive a candidate software update. Both the software system and the candidate software update are expressed in an extended formal language that is an extension of one or more base formal languages. Sentences in each base formal language, up to logical equivalence, form elements in a Boolean Algebra, which has a falsity element 0 denoting falsity and and has a truth element 1 denoting truth. The extended formal language includes the first-order theory of Boolean Algebras interpreted in the Boolean Algebra arising from each base formal language, extended to include a plurality of constant symbols, each corresponding to a respective logical equivalence class of sentences in each base formal language. The extended formal language and each base formal language, regarded as Boolean Algebras under logical equivalence, are elementarily equivalent under a signature of Boolean Algebra. The candidate software update corresponds to an update sentence u in the extended formal language.

404 —

For a condition element c, in the extended formal language, specifying a condition to validate the candidate software update, computing a truth value for $uc' = 0$ in the extended formal language, wherein $uc'$ is the logical conjunction of u with the logical negation of c.

406 —

When $uc' = 0$ is false, reject the candidate software update.

408 —

When $uc' = 0$ is true, accept the candidate software update, and instal the candidate software update on the computing device.

# Figure 4

Europäisches
Patentamt

European
Patent Office

Office européen
des brevets

## EUROPEAN SEARCH REPORT

**Application Number**

EP 24 15 2499

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIKTOR KUNCAK ET AL: "The First-Order Theory of Sets with Cardinality Constraints is Decidable", ARXIV.ORG, CORNELL UNIVERSITY LIBRARY, 201 OLIN LIBRARY CORNELL UNIVERSITY ITHACA, NY 14853, 17 July 2004 (2004-07-17), XP080159646, * the whole document * | 1-16 | INV. G06F8/10 G06F8/65 G06F11/00 G06N5/02 G06Q50/18 |
| A | DING YIFENG ED - BONANNO GIACOMO ET AL: "On the Logic of Belief and Propositional Quantification", JOURNAL OF PHILOSOPHICAL LOGIC, SPRINGER NETHERLANDS, DORDRECHT, vol. 50, no. 5, 5 April 2021 (2021-04-05), pages 1143-1198, XP037563495, ISSN: 0022-3611, DOI: 10.1007/S10992-021-09595-8 [retrieved on 2021-04-05] * the whole document * | 1-16 | |
| A | Anonymous: "Guarded Command Language - Wikipedia", , 16 March 2023 (2023-03-16), XP093173690, Retrieved from the Internet: URL:https://web.archive.org/web/2023031603 5612/https://en.wikipedia.org/wiki/Guarded _Command_Language [retrieved on 2024-06-12] * the whole document * | 1-16 | TECHNICAL FIELDS SEARCHED (IPC) G06F G06N G06Q |

-/--

The present search report has been drawn up for all claims

| Place of search | Date of completion of the search | Examiner |
|---|---|---|
| Munich | 17 June 2024 | Filimon, Diana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 15 2499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Description logic - Wikipedia", , 6 December 2023 (2023-12-06), XP093173725, Retrieved from the Internet: URL:https://web.archive.org/web/20231206040652/https://en.wikipedia.org/wiki/Description_logic [retrieved on 2024-06-12] * the whole document * ----- | 1-16 | |
| | | | **TECHNICAL FIELDS SEARCHED (IPC)** |

The present search report has been drawn up for all claims

| Place of search | Date of completion of the search | Examiner |
|---|---|---|
| Munich | 17 June 2024 | Filimon, Diana |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ............................................................................................................

& : member of the same patent family, corresponding
   document

EPO FORM 1503 03.82 (P04C01)

Europäisches
Patentamt
European
Patent Office
Office européen
des brevets

**Application Number**

EP 24 15 2499

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 24 15 2499

The Search Division considers that the present European patent application does not comply with the requirements of unity of invention and relates to several inventions or groups of inventions, namely:

1. claims: 1-16

   Validation of tasks

1.1. claims: 1-11

   Validation of computer software updates

1.2. claim: 12

   Executing queries over a knowledge system supporting storing and reasoning over sentences in a same language that the knowledge system supports.

1.3. claim: 13

   Validating contract provisions

1.4. claims: 14-16

   Validating commands for an interactive software platform
   - - -

Please note that all inventions mentioned under item 1, although not necessarily linked by a common inventive concept, could be searched without effort justifying an additional fee.